(19) Europäisches Patentamt
European Patent Office
Office européen des brevets

(11) Veröffentlichungsnummer: **0 528 303 A1**

(12) **EUROPÄISCHE PATENTANMELDUNG**

(21) Anmeldenummer: **92113531.5**

(51) Int. Cl.⁵: **A01N 53/00**, A01N 25/34

(22) Anmeldetag: **08.08.92**

(30) Priorität: **21.08.91 DE 4127649**
**19.05.92 DE 4216535**

(43) Veröffentlichungstag der Anmeldung:
**24.02.93 Patentblatt 93/08**

(84) Benannte Vertragsstaaten:
**AT BE CH DE DK ES FR GB GR IT LI NL SE**

(71) Anmelder: **BAYER AG**

**W-5090 Leverkusen 1 Bayerwerk(DE)**

(72) Erfinder: **Sieveking, Hans-Ulrich, Dr.**
**Lortzingerstrasse 23**
**W-5090 Leverkusen 1(DE)**
Erfinder: **Stendel, Wilhelm, Dr.**
**In den Birken 55**
**W-5600 Wuppertal 1(DE)**
Erfinder: **Voege, Herbert, Dr.**
**Martin-Buber-Strasse 41**
**W-5090 Leverkusen 1(DE)**

(54) **Formkörper zur Bekämpfung von Schädlingen.**

(57) Die vorliegende Erfindung betrifft Formkörper zur Bekämpfung von Schädlingen, die beta-Cyfluthrin als Wirkstoff enthalten.

EP 0 528 303 A1

Die vorliegende Erfindung betrifft Formkörper zur Bekämpfung von Schädlingen, enthaltend den Wirkstoff beta-Cyfluthrin.

2,2-Dimethyl-3-(2,2-dichlorvinyl)-cyclopropan-1-carbonsäure-α-cyano-3-phenoxy-4-fluorbenzylester (common name Cyfluthrin) ist bereits bekannt geworden (DE-OS 2 709 264).

2,2-Dimethyl-3-dichlorvinyl-cyclopropan-carbonsäure-(Permethrinsäure)-α-cyano-3'-phenoxy-4'-fluorbenzylester besitzt die Strukturformel (I)

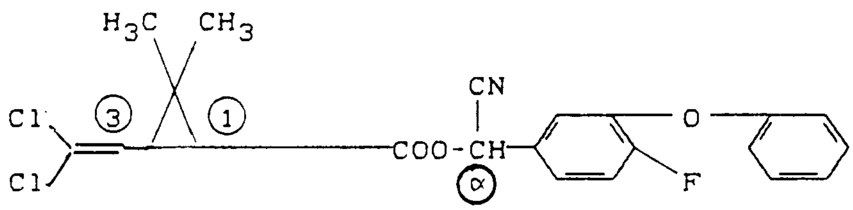

(I)

Die Verbindung besitzt drei asymmetrische Zentren 1, 3 und α. Sie liegt damit in folgenden Enantiomerenpaaren vor;

| | | |
|---|---|---|
| a: | 1R-3R-αR + 1S-3S-αS | 1,3 cis |
| b: | 1R-3R-αS + 1S-3S-αR | |
| c: | 1R-3S-αR + 1S-3R-αS | 1,3 trans |
| d: | 1R-3S-αS + 1S-3R-αR | |

Besonders wirksam gegen zahlreiche wirtschaftlich interessante Schädlinge sind die Enantiomerenpaare b und d. Ihre Mischung hat die Bezeichnung beta-Cyfluthrin.

Die Herstellung von beta-Cyfluthrin ist bereits bekannt geworden aus DE-OS 3 522 629. Es ist auch bekannt geworden, daß Stereoisomere von Cyfluthrin eine höhere insektizide und akarizide Wirksamkeit ausweisen als das Gemisch aller Isomeren. Außerdem zeigen die einzelnen Stereoisomeren ein unterschiedliches Wirkungsspektrum (EP-OS 22 970).

Beta-Cyfluthrin weist im Vergleich zu Cyfluthrin nur 4 Einzelisomere auf.

Cyfluthrin besteht zu ca. 50 % aus den Isomeren des beta-Cyfluthrin. Beta-Cyfluthrin hat etwa die doppelte Wirksamkeit von Cyfluthrin. Man kann daher schließen, daß die nicht in beta-Cyfluthrin enthaltenen Isomeren praktisch unwirksam sind.

Es sind Formkörper zur Bekämpfung von Ektoparasiten bei Tieren bekannt geworden, die Cyfluthrin als Wirkstoff enthalten. In der Praxis zeigte sich, daß diese Formkörper, z.B. Kleintierhalsbänder zur Flohbekämpfung, nicht ausreichend und nicht lange genug wirken.

Gegenstand der vorliegenden Erfindung sind

1. Formkörper zur Bekämpfung von Schädlingen, die als Wirkstoff beta-Cyfluthrin enthalten.
2. Verwendung von beta-Cyfluthrin als Wirkstoff in Formkörpern zur Bekämpfung von Schädlingen.
3. Verwendung von beta-Cyfluthrin als Wirkstoff zur Herstellung von Formkörpern zur Bekämpfung von Schädlingen.

Überraschenderweise zeigt die Verwendung von beta-Cyfluthrin in Formkörpern zur Bekämpfung von Schädlingen eine Verbesserung der Wirkung und der Wirkungsdauer, die weit über den bekannten Wirkunterschied zwischen Cyfluthrin und beta-Cyfluthrin bei anderen Arten der Anwendung hinausgeht und den praktischen Einsatz in Formkörpern überhaupt erst sinnvoll macht.

Formkörper gemäß vorliegender Erfindung sind u.a. Halsbänder, Anhänger für Halsbänder (Medaillons), Ohrmarken, Bänder zur Befestigung an Gliedmaßen oder Körperteilen, Klebestreifen und -folien, Abziehfolien. Formkörper gemäß vorliegender Erfindung sind aber auch Insektenköder in Form von Strips, Folien, Streifen, Schwämmen, Granulaten.

Die Formkörper enthalten den Wirkstoff in Konzentrationen von 0,1 - 30 Gew.-%, bevorzugt von 0,5 - 20 Gew.-%, besonders bevorzugt von 1 - 10 Gew.-%.

Im Fall von Halsbändern liegt die Konzentration des Wirkstoffs bevorzugt bei 1 - 10 %; im Fall von Medaillons, Anhängern und Ohrmarken bevorzugt bei 1 -15 %, im Fall von Folien, Klebestreifen, Ködern bevorzugt bei 0,1 - 5 %.

Zusätzlich zu beta-Cyfluthrin können die erfindungsgemäßen Formkörper andere Wirkstoffe sowie Duftstoffe, Lockstoffe, Spreitmittel,Farbstoffe enthalten.

Zu den Wirkstoffen zählen Carbamate wie z.B. Propoxur, Pyrethroide wie z.B. Flumethrin, Fluvalinate, Permethrin, Cypermethrin, Phosphor- und Phosphonsäureester wie z.B. Fenthion, Diazinon, Triazine wie z.B. Amitraz, insektenentwicklungshemmende Substanzen Juvenilhormone und Juvenoide wie z.B Methoprene, Alkoxydiphenylether wie z.B. Pyriproxyfen, Benzoylharnstoffe wie z.B. Triflumuron.

Zu den Lockstoffen zählen besonders für den Fall, daß die erfindungsgemäßen Formkörper als Insektenköder eingesetzt werden sollen, Zucker und Zuckerlösungen, natürliche und synthetische Pheromone und deren Analoga.

Als Spreitmittel oder spreitende Öle kommen folgende Substanzen in Betracht.

Silikonöle verschiedener Viskosität; Fettsäureester, wie Aethylstearat, Laurinsäurehexylester, Dipropylenglykolpelargonat; Ester verzweigter Fettsäuren mittlerer Kettenlänge mit gesättigten $C_{16}$-$C_{18}$-Fettalkoholen wie Isopropylmyristat, Isopropylpalmitat; Capryl/Caprinsäureester von gesättigten Fettalkoholen der Kettenlänge $C_{12}$-$C_{18}$,Isopropylstearat, Ölsäuredecylester, Ölsäureoleylester; wachsartige Fettsäureester Adipinsäurediisopropylester, letzterem verwandte Estergemische u.a. Triglyceride, wie Capryl/Caprinsäuretriglycerid, Triglyceridgemische mit Pflanzenfettsäuren der Kettenlänge $C_8$ - $C_{12}$ oder anderen speziell ausgewählten natürlichen Fettsäuren; Partial glyceridgemische gesättigter oder ungesättigter eventuell auch hydroxylgruppenhaltiger Fettsäuren, Monoglyceride der $C_8$ - $C_{10}$-Fettsäuren und andere.

Desweiteren kommen in Frage Isopropylmyristat, Isopropylstearat, Isopropylpalmitat, Laurinsäurehexylester, Ölsäuredecylester, Dibutylstearat, Dibutylsebacat, Paraffinöl, Ethylhexylpalmitat/Stearat, bzw. Isotridecylstearat, Isopropylmyristat-Isopropylpalmitat-Isopropylstearat-Gemisch.

Für die Herstellung der erfindungsgemäßen Formkörper kommen thermoplastische und flexible hitzehärtbare Kunststoffe sowie Elastomere und thermoplastische Elastomere in Frage. Als solche seien genannt Polyvinylharze, Polyurethane, Polyacrylate, Epoxyharze, Cellulose, Cellulosederivate, Polyamide und Polyester, die mit den obengenannten Wirkstoff ausreichend verträglich sind. Die Polymeren müssen eine ausreichende Festigkeit und Biegsamkeit haben, um beim Formen nicht zu reißen oder brüchig zu werden. Sie müssen von ausreichender Haltbarkeit sein, um gegen normale Abnutzung beständig zu sein. Außerdem müssen die Polymere eine ausreichende Wanderung des Wirkstoffs an die Oberfläche des Formkörpers zulassen.

Zu den Polyvinylharzen gehören Polyvinylhalogenide, wie Polyvinylchlorid, Polyvinylchlorid-Vinylacetat und Polyvinylfluorid; Polyacrylat- und Polymethacrylatester, wie Polymethylacrylat und Polymethylmethacrylat; und Polyvinylbenzole, wie Polystyrol und Polyvinyltoluol.

Für die Herstellung der erfindungsgemäßen Halsbänder auf der Basis Polyvinylharz sind die Weichmacher geeignet, die üblicherweise zum Weichmachen von festen Vinylharzen verwendet werden. Der zu verwendende Weichmacher hängt von dem Harz und seiner Verträglichkeit mit dem Weichmacher ab. Geeignete Weichmacher sind beispielsweise Ester der Phosphorsäure, Ester der Phthalsäure wie Dimethylphthalat und Dioctylphthalat, und Ester von Adipinsäure, wie Diisobutyladipat. Es können auch andere Ester, wie die Ester von Azelainsäure, Maleinsäure, Ricinolsäure, Myristinsäure, Palmitinsäure, Ölsäure, Sebacinsäure, Stearinsäure und Trimellithsäure, sowie komplexe lineare Polyester, polymere Weichmacher und epoxydierte Sojabohnenöle verwendet werden. Die Menge des Weichmachers beträgt etwa 10 bis 50 Gew.-%, vorzugsweise etwa 20 bis 45 Gew.-% der gesamten Zusammensetzung.

In den Halsbändern können noch weitere Bestandteile, wie Stabilisierungsmittel, Spreitmittel, Schmiermittel, Füllstoffe und Färbematerialien, enthalten sein, ohne daß dadurch die grundlegenden Eigenschaften der Zusammensetzung verändert werden. Geeignete Stabilisierungsmittel sind Antioxydationsmittel und Mittel, die die Bänder vor ultravioletter Strahlung und unerwünschtem Abbau während der Bearbeitung, wie Strangpressen schützen. Einige Stabilisierungsmittel, wie epoxydierte Sojabohnenöle, dienen außerdem als sekundäre Weichmacher. Als Schmiermittel können beispielsweise Stearate, Stearinsäure und Polyethylene mit niedrigem Molekulargewicht verwendet werden. Diese Bestandteile können in einer Konzentration bis zu etwa 5 Gew.-% der gesamten Zusammensetzung verwendet werden.

Bei der Herstellung der erfindungsgemäßen Halsbänder auf Vinylbasis werden die verschiedenen Bestandteile nach bekannten Verfahren gemischt und nach bekannten Strangpreß- oder Spritzgußverfahren formgepreßt.

Die Wahl des Verarbeitungsverfahrens zur Herstellung der erfindungsgemäßen Halsbänder richtet sich technisch grundsätzlich nach den rheologischen Eigenschaften des Bandmaterials und der Form des gewünschten Bandes. Die Verarbeitungsverfahren können nach der Verarbeitungstechnologie oder nach der Art der Formgebung eingestellt werden. Bei der Verfahrenstechnologie kann man die Verfahren nach den bei ihnen durchlaufenden rheologischen Zuständen unterteilen. Danach kommen für viskose Bandmaterialien Gießen, Pressen, Spritzgießen und Auftragen und für elastoviskose Polymere Spritzgießen, Strangpressen (Extrudieren), Kalandrieren, Walzen und gegebenenfalls Kanten in Frage. Nach Art der Formgebung eingeteilt, lassen sich die erfindungsgemäßen Formkörper durch Gießen, Tauchen, Pressen, Spritzgießen, Extrudieren, Kalandrieren, Prägen, Biegen, Tiefziehen etc. herstellen.

Diese Verarbeitungsverfahren sind bekannt und bedürfen keiner näheren Erklärung. Im Prinzip gelten für andere Polymere die Erläuterungen, die oben beispielhaft für Polyvinylharze gemacht wurden.

Die als Trägermaterial dienenden Polyurethane werden in an sich bekannter Weise durch Umsetzung von Polyisocyanaten mit höhermolekularen, mindestens zwei gegenüber Isocyanaten reaktionsfähigen Gruppen aufweisenden Verbindungen sowie gegebenenfalls niedermolekularen Kettenverlängerungsmitteln und/oder monofunktionellen Kettenabbrechern hergestellt.

Als Ausgangskomponenten bei der Herstellung der Polyurethane kommen aliphatische, cycloaliphatische, araliphatische, aromatische und heterocyclische Polyisocyanate in Betracht, wie sie z.B. von W. Siefken in Liebig's Annalen der Chemie, 562, Seiten 75 bis 136, beschrieben werden. Beispielhaft seien genannt: Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Verbindungen, 1-Isocyanato-3,3,5.-trimethyl-5-isocyanatomethyl-cyclohexan (s. DE-AS 202 785 und US-PS 3 401 190), 2,4- und 2,6-Hexahydrotoluylen-diisocyanat sowie beliebige Gemische dieser Verbindungen; Hexahydro-1,3- und/oder -1,4-phenylendiisocyanat, Perhydro-2,4'-und/oder -4,4'-diphenylmethan-diisocyanat, 1,3- und 1,4-Phenylendiisocyanat, 2,4- und 2,6-Toluylendiisocyanat sowie beliebige Gemische dieser Verbindungen; Diphenylmethan-2,4'-und/oder -4,4'-diisocyanat, Naphthylen-1,5-diisocyanat, Triphenylmethan-4,4', 4''-triisocyanat, Polyphenyl-polymethylen-polyisocyanate, wie sie durch Anilin-FormaldehydKondensation und anschließende Phosgenierung erhalten und z.B. in den GB-PSen 874 430 und 848 671 beschrieben werden; m- und p-Isocyanatophenol-sulfonyl-isocyanate gemäß der US-PS 3 454 606; perchlorierte Arylpolyisocyanate, wie sie z.B. in der DE-AS 1 157 601 und in der US-PS 3 277 138 beschrieben werden; Carbodiimidgruppen aufweisende Polyisocyanate, wie sie in der DE-PS 1 092 007 und in der US-PS 3 152 162 beschrieben werden; Diisocyanate, wie sie in der US-PS 3 492 330 beschrieben werden; Allophanatgruppen aufweisende Polyisocyanate, wie sie z.B. in der GB-PS 994 890, der DE-PS 761 626 und der veröffentlichten holländischen Patentanmeldung 7 102 524 beschrieben werden; Isocyanuratgruppen aufweisende Polyisocyanate, wie sie z.B. in der US-PS 3 001 973, in den DE-PSen 1 022 789, 1 222 067 und 1 027 394 sowie in den DE-OSen 1 929 034 und 2 004 048 beschrieben werden; Urethangruppen aufweisende Polyisocyanate, wie sie z.B. in der DE-PS 752 261 oder in der US-PS 3 394 164 beschrieben werden; acylierte Harnstoffgruppen aufweisende Polyisocyanate gemäß der DE-PS 1 230 778; Biuretgruppen aufweisende Polyisocyanate, wie sie z.B. in der DE-PS 1 101 394, in den US-PSen 3 124 605 und 3 201 372, sowie in der GB-PS 889 050 beschrieben werden; durch Telomerisationsreaktionen hergestellte Polyisocyanate, wie sie z.B. in der US-PS 3 654 106 beschrieben werden; Estergruppen aufweisende Polyisocyanate, wie sie z.B. in den GB-PSen 965 474 und 1 072 956, in der US-PS 3 567 763 und in der DE-PS 1 231 688 genannt werden; Umsetzungsprodukte der obengenannten Isocyanate mit Acetalen gemäß der DE-PS 1 072 385 und polymere Fettsäurereste enthaltene Polyisocyanate gemäß der US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanaten, einzusetzen. Ferner ist es möglich, beliebige Mischungen der vorgenannten Polyisocyanate zu verwenden.

Bevorzugte Polyisocyanate sind im allgemeinen die Toluylendiisocyanate und die Diphenylmethandiisocyanate.

Ausgangskomponenten für die Herstellung der Polyurethane sind ferner Verbindungen mit mindestens zwei gegenüber Isocyanaten reaktionsfähigen Wasserstoffatomen mit einem Molekulargewicht in der Regel von 400 - 10 000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10 000, vorzugsweise 1 000 bis 6 000, z.B. mindestens zwei, in der Regel 2 - 8, vorzugsweise aber 2 - 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen, Carbonsäuren. Anstelle der freien Polycarbonsäuren können auch die entsprechenden Polycarbonsäureanhydride oder entsprechenden Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuedimethylester und Terephthalsäure-bis-glykolester.

Als mehrwertige Alkohole kommen z.B. Ethylenglykol, Propylenglykol-(1,2) und -(1,3), Butylenglykol-(1,4) und -(2,3), Hexandiol.-(1,6), Octandiol-(1,8), Neopentyglykol, Cyclohexandimethanol(1,4-Bis-hydroxymethylcyclohexan), 2-Methyl-1,3-.propandiol, Glycerin, Trimethylolpropan, Hexantriol-(1,2,6), Butantriol-(1,2,4), Trimethyläthan, Pentaerythrit, Chinit, Mannit und Sorbit, Methylglykosit, ferner Diethylenglykol, Triethylenglykol, Tetraethylenglykol, Polyethylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. $\epsilon$-Caprolacton oder Hydroxycarbonsäuren, z.B. $\omega$-Hydroxycapronsäure, sind einsetzbar.

Als mehrwertige Alkohole kommen infrage Polyether die mindestens zwei, in der Regel zwei bis acht, vorzugsweise zwei bis drei, Hydroxylgruppen aufweisen. Diese sind an sich bekannt und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol(1,3) oder -(1,2), Trimethylolpropan, 4,4' -Dihydroxy diphenylpropan, Anilin, Ethanolamin oder Ethylendiamin hergestellt. Auch Sucrosepolyether, wie sie z.B. in den DE-ASen 1 176 358 und 1 064 938 beschrieben werden, kommen in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol und Acrylnitril in Gegenwart von Polyethern entstehen (US-PSen 3 383 351, 3 304 273, 3 523 093, 3 110 695, deutsche Patentschrift 1 152 536), sind geeignet, ebenso OH-Gruppen aufweisende Polybutadiene.

Unter den Polythioethern seien insbesondere die Kondensationsprodukte an Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester oder Polythioetheresteramide.

Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltene Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Vertreter dieser Verbindungen sind z.B. in High Polymers, Vol. XVI, "Polyurethans, Chemistry and Technology", verfaßt von Saunders-Frisch, Interscience Publishers, New York, London, Band I, 1962, Seiten 32 - 42 und Seiten 44 - 54 und Band II, 1964, Seiten 5 -6 und 198 - 199, sowie im Kunststoff-Handbuch, Band VII, Vieweg-Höchtlen, Carl-Hanser-Verlag, München, 1966, z.B. auf den Seiten 45 - 71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400 - 10 000, z.B.

Mischungen von Polyethern, eingesetzt werden.

Als gegebenenfalls einzusetzende Ausgangskomponenten kommen auch Verbindungen mit mindestens zwei gegenüber Isocyanaten reaktionsfähigen Wasserstoffatomen von einem Molekulargewicht 32 - 400 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt:
Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol-(1,2,6), Trimethyloläthan, Pentaerythrit, Chinit, Mannit und Sorbit, Diethylenglykol, Triethylenglykol, Tetraethylenglykol, Polyethylenglykole mit einem Molekulargewicht bis 400, Dipropylenglykol, Polypropylenglykole mit einem Molekulargewicht bis 400, Dibutyllenglykol, Polybutylenglykole mit einem Molekulargewicht bis 400, 4,4'-Dihydroxydiphenylpropan, Di-hydroxymethyl-hydrochinon, Äthanolamin, Diäthanolamin, Triäthanolamin, 3-Aminopropanol, Ethylendiamin, 1,3-Diaminopropan, 1-Mercapto-3-aminopropan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäueester, Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32 - 400 verwendet werden.

Es können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in den DE-ASen 1 168 075 und 1 260 142, sowie den DE-OSen 2 324 134, 2 423 984, 2 512 385, 2 513 815, 2 550 797, 2 550 833 und 2 550 862 beschrieben. Es ist aber auch möglich, gemäß US-PS 3 869 413 bzw. DE-OS 2 550 860 eine fertige wässrige Polymerdispersion mit einer Polyhydroxylverbindung zu vermischen und anschließend aus dem Gemisch das Wasser zu entfernen.

Bei der Auswahl der für die Herstellung des Polyurethans verwendeten höhermolekularen Polyolkomponente ist zu beachten, daß das fertige Polyurethan in Wasser nicht quellbar sein soll. Die Verwendung eines Überschusses an Polyhydroxylverbindungen mit Ethylenoxideinheiten (Polyethylenglykolpolyether oder Polyester mit Diethylen- oder Triethylenglykol als Diolkomponente) ist daher zu vermeiden.

Die erfindungsgemäßen Formkörper eignen sich bei günstiger Warmblütertoxizität zur Bekämpfung von Parasiten bzw. tierischen Schädlingen wie Arthropoden, vorzugsweise Insekten und Spinnentieren, die in der Tierhaltung und Tierzucht bei Haus- und Nutztieren sowie Zoo-, Labor-, Versuchs- und Hobbytieren vorkommen. Sie sind dabei gegen alle oder einzelne Entwicklungsstadien der Schädlinge sowie gegen resistente und normal sensible Arten der Schädlinge wirksam.

Zu den Schädlingen gehören:
Aus der Ordnung der Anoplura z.B. Haematopinus spp., Linognathus spp., Solenopotes spp., Pediculus spp., Pthirus spp.;
aus der Ordnung der Mallophaga z.B. Trimenopon spp., Menopon spp., Eomenacanthus spp., Menacanthus spp., Trichodectes spp., Felicola spp., Damalinea spp., Bovicola spp;
aus der Ordnung der Diptera z.B. Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cordylobia spp., Cochliomyia spp., Chrysomyia spp., Sarcophaga spp., Wohlfartia spp., Gasterophilus spp., Oesteromyia spp., Oedemagena spp., Hypoderma spp., Oestrus spp., Rhinoestrus spp., Melophagus spp., Hippobosca spp..

Aus der Ordnung der Siphonaptera z.B. Ctenocephalides spp., Echidnophaga spp., Ceratophyllus spp..

Aus der Ordnung der Metastigmata z.B. Hyalomma spp., Rhipicephalus spp., Boophilus spp., Amblyomma spp., Haemophysalis spp., Dermacentor spp., Ixodes spp., Argas spp., Ornithodorus spp., Otobius spp.;
aus der Ordnung der Mesastigmata z.B. Dermanyssus spp., Ornithonyssus spp., Pneumonyssus spp..

Aus der Ordnung der Prostigmata z.B. Cheyletiella spp., Psorergates spp., Myobia spp., Demodex spp., Neotrombicula spp.;
aus der Ordnung der Astigmata z.B. Acarus spp., Myocoptes spp., Psoroptes spp., Chorioptes spp.,

Otodectes spp., Sarcoptes spp., Notoedres spp., Knemidocoptes spp., Neoknemidocoptes spp. Lytodites spp., Laminosioptes spp..

Zu den Haus- und Nutztieren gehören Säugetiere wie z.B. Rinder, Schafe, Ziegen, Pferde, Schweine, Hunde, Katzen, Kamele, Wasserbüffel, Esel, Kaninchen, Damwild, Rentiere, Pelztiere wie z.B. Nerze, Chinchilla, Waschbär, Vögel wie z.B. Hühner, Puten, Fasanen, Gänse, Enten.

Bevorzugt eingesetzt werden die erfindungsgemäßen Formkörper in Form von Halsbändern und Halsbandanhängern (Medaillons) bei Hobbytieren wie Hunden und Katzen sowie bei Rindern als Ohrmarken.

Formulierungsbeispiele:

A) Herstellung einer insektiziden Ohrmarke für Rinder

Zusammensetzung:

| | |
|---|---|
| 1. beta-Cyfluthrin | 10,0 % |
| 2. Dioctyladipat | 25,0 % |
| 3. Stabilisierungsmittel | 3,0 % |
| 4. Farbstoff | 0,3 % |
| 5. PVC Homopolymer | 61,7 % |
| | 100,0 % |

Herstellung:

a) 1 wird in 2 und 3 bei leichtem Erwärmen gelöst.
b) 4 und 5 werden gemischt und bei laufendem Mischer die Lösung a) hinzugegeben.
c) Es wird so lange gemischt, bis ein fließfähiges Granulat entstanden ist.
d) c) wird auf einer Spritzgußmaschine zu Ohrmarken von 4,5 g verpreßt.

B) Herstellung eines insektiziden Medaillons für Hunde

Zusammensetzung:

| | |
|---|---|
| 1. beta-Cyfluthrin | 15,0 % |
| 2. Isopropylpalmitat | 8,0 % |
| 3. Triethylcitrat | 17,0 % |
| 4. PVC Homopolymer | 60,0 % |
| | 100,0 % |

Herstellung:

a) 1, 2 und 3 unter Erwärmen lösen.
b) PVC vorlegen und mit Lösung a) hochtourig mischen.
c) Mischung b zu 16 $cm^2$ großen Medaillons spritzgießen. (Unter Medaillons werden Anhänger verstanden, die an ein übliches Halsband (ohne Insektizid) - z.B. aus Leder - angebracht werden, vergleichbar einer Hundemarke.)

C) Herstellung eines insektiziden und larviciden Medaillons

Zusammensetzung:

| | |
|---|---|
| 1. beta-Cyfluthrin | 10,0 % |
| 2. Pyriproxyfen | 0,3 % |
| 3. Dioctylphthalat | 10,0 % |
| 4. Dibutyladipat | 12,0 % |
| 5. epoxidiertes Sojabohnenöl | 2,7 % |
| 6. Farbpigment | 0,2 % |
| 7. PVC Homopolymer | 64,8 % |
| | 100,0 % |

Herstellung:

a) 1 bis 5 werden zusammengewogen und unter Erwärmen gelöst.
b) 6 und 7 werden gemischt.
c) a) wird unter laufendem Mischer in b) eingerührt und so lange gemischt, bis ein fließfähiges Pulver entstanden ist.
d) Das Pulver c wird auf einem Extruder zu einem Band extrudiert, aus dem 16 $cm^2$ große Platten als Medaillons ausgestanzt werden.

D) Herstellung eines Hundehalsbandes

Zusammensetzung:

| | |
|---|---|
| 1. beta-Cyfluthrin | 10,0 % |
| 2. Triacetin | 9,5 % |
| 3. epoxidiertes Sojaöl | 20,0 % |
| 4. Stearinsäure | 0,5 % |
| 5. PVC Homopolymer | 60,0 % |
| | 100,0 % |

Herstellung:

a) 1 wird in 2 und 3 unter Erwärmen gelöst.
b) 5 und 4 werden gemischt.
c) Unter laufendem Mischer wird a) auf b) gegeben und gemischt, bis ein fließfähiges Granulat entstanden ist.
d) c) wird mit einem Extruder zu einem Band extrudiert, das in 50 cm Länge abgeschnitten wird. Das Band wird noch mit einer Schnalle versehen. Alternativ läßt sich aber Mischung c) auch auf einer Spritzgußmaschine zu Hundehalsbändern formen.

E) Herstellung eines Halsbandes auf Basis Polyurethan

Komponente I

| | |
|---|---|
| beta-Cyfluthrin | 12,5 |
| Trihydroxypolyether (M6 4800) | 48,0 |
| Butandiol-1,4 | 5,0 |
| Farbpigment | 0,5 |
| Zeolith Paste (1:1 im Rizinusöl) | 0,5 |
| Isopropylmyristat | 8,0 |
| Dibutylzinndilaurat | 0,02 |

Komponente II

Tripropylenglykol-modifiziertes 4,4'-Diisocyanatodiphenyl-methan (Isocyanatgehalt 23 %)

Die Substanzen der Komponente I werden - bis auf den Katalysator (Dibutylzinndilaurat) - in einem beheizbaren Kessel zusammengemischt und auf ca. 60 °C erwärmt. Danach wird der Katalysator zugemischt.

Diese Komponente I wird mit der Komponente II intensiv vermischt und dann in eine Kastenform ausgegossen. Das Gemisch beginnt 30 sec nach dem Mischen zu reagieren und ist nach ca. 60 sec erhärtet. Nach Erkalten kann die entstandene Platte in Bänder zerschnitten werden.

F) Herstellung einer insektiziden Folie für den Hygiene-Bereich

Zusammensetzung:

| | |
|---|---|
| beta-Cyfluthrin | 0,2 |
| Polyethylen | 99,8 |
| | 100,0 |

Herstellung:

a) Der aufgeschmolzene Wirkstoff wird auf einen Teil des Polyethylens (PE) (0,2 auf 10 Teile) aufgezogen.

b) a) wird mit dem restlichen PE gemischt und in üblicher Weise zu Folien verarbeitet.

(B1) Beispiel für ein insektizides Medaillon für Hunde

Zusammensetzung;

| | |
|---|---|
| 1. beta-Cyfluthrin | 10,0 % |
| 2. Triacetin | 5,0 % |
| 3. modifiziertes Polyamid | 85,0 % |
| | 100,0 % |

Herstellung:

a) 1 und 2 wird unter Erwärmen verflüssigt.
b) Bei laufendem Mischer wird die Lösung a) zugegeben und weitergemischt bis ein homogenes Granulat entstanden ist.
c) Das Granulat aus b) wird in Form der Medaillons spritzgegossen. Es kann auch durch Ausstanzen aus Platten erhalten werden, die aus einem Extrusions-Prozeß stammen.

Die Ergebnisse der folgenden Versuche a - d zeigen, daß beta-Cyfluthrin bei anderen Anwendungsarten als über Formkörper etwa doppelt so wirksam ist wie Cyfluthrin (Gemisch aller Isomeren).

a) Test mit Boophilus microplus

Lösungsmittel: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

10 adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

| | 100 % wirksamer niedrigster Abtötungsgrad bei ppm a.i. |
|---|---|
| Cyfluthrin | 200 |
| beta-Cyfluthrin | 400 |

b) Fliegentest

Testtiere: Musca domestica, Stamm WHO(N)
Lösungsmittel: 35 Gewichtsteile Ethylenglykolmonomethylether
35 Gewichtsteile Nonylphenolpolyglykolether

Zwecks Herstellung einer geeigneten Formulierung vermischt man drei Gewichtsteile Wirkstoff mit sieben Teilen des oben angegebenen Lösungsmittel-Emulgator-Gemisches und verdünnt das so erhaltene Emulsionskonzentrat mit Wasser auf die jeweils gewünschte Konzentration.

2 ml dieser Wirkstoffzubereitung werden auf Filterpapierscheiben (Ø 9,5 cm) pipettiert, die sich in Petrischalen entsprechender Größe befinden. Nach Trocknung der Filterscheiben werden 25 Testtiere in die Petrischalen überführt und abgedeckt.

Nach 6 Stunden wird die Wirksamkeit der Wirkstoffzubereitung ermittelt. Die Wirksamkeit drückt man in % aus.

| | 100 % Wirksamkeit bei niedrigster Konzentration von ppm a.i. | | |
|---|---|---|---|
| Teststamm / Wirkstoff | M.dom WHO(N) | M.autumnalis OP-sens | S.calcitrans OP-sens |
| Cyfluthrin | 100 | 300 | 100 |
| beta-Cyfluthrin | 40 | 100 | 30 |

c) Blowfly-Larven-Test

Testtiere: Lucilia cuprina-Larven
Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird die Wirksamkeit der Wirkstoffzubereitung ermittelt.

| | 100 % Wirksamkeit bei niedrigster Konzentration von ppm a.i. |
|---|---|
| Cyfluthrin | 30 |
| beta-Cyfluthrin | 15 |

d) Flohtest

Testtiere: Ctenocephalides felis
Lösungsmittel: 35 Gewichtsteile Ethylenglykolmonomethylether
35 Gewichtsteile Nonylphenolpolyglykolether

Zur Herstellung einer geeigneten Formulierung vermischt man drei Gewichtsteile Wirkstoff mit sieben Teilen des oben angegebenen Lösungsmittel-Emulgator-Gemisches und verdünnt das so erhaltene Emulsionskonzentrat mit Wasser auf die jeweils gewünschte Konzentration.

2 ml dieser Wirkstoffzubereitung werden auf Filterpapierscheiben (ø 9,5 cm) pipettiert, die sich in Petrischalen entsprechender Größe befinden. Nach Trocknung der Filterscheiben werden 25 Testtiere in die Petrischalen überführt und abgedeckt.

Nach 24 h wird die Wirksamkeit der Wirkstoffzubereitung ermittelt. Die Wirksamkeit drückt man in % aus.

| | 100 % Wirksamkeit bei niedrigster Konzentration von ppm a.i. |
|---|---|
| Cyfluthrin | 200 |
| beta-Cyfluthrin | 80 |

Die Ergebnisse der folgenden Versuche A und B zeigen, daß beta-Cyfluthrin über Formkörper angewandt schon nach kurzer Einwirkungszeit zu 100 % wirkt während Cyfluthrin über Formkörper angewandt praktisch unwirksam ist:

A) In vivo-Formkörper-Test

Feststellung der akuten Wirkung bei Flöhen (Ctenocephalides felis) des Hundes und der Katze.

Hunde und Katzen werden mit etwa 25 männlichen und weiblichen Flöhen der Art C. felis einen Tag vor Anlegen der Formkörper infiziert. Kurz vor der Behandlung werden die Wirtstiere untersucht und visuell festgestellt, wieviel der eingesetzten Flöhe sich am Tier aufhalten.

Diesen Hunden/Katzen werden Formkörper ("Medaillons"), aus PVC die den zu testenden Wirkstoff in einer Konzentration von 10 Gew.-% enthalten, angelegt.

Die akute Wirkung des Formkörpers wird ermittelt, indem die Zahl der lebenden Flöhe auf den Hunden/Katzen 24 h nach Anlegen der Formkörper festgestellt wird.

Die Wirkung wird in % ausgedrückt. Dabei bedeutet 100 % Wirkung, daß keine lebenden Flöhe mehr am Tier gefunden werden, 0 % Wirkung bedeutet, daß die Zahl der lebenden Flöhe nach Anlegen des Formkörpers derjenigen Zahl vor Anlegen des Formkörpers entspricht. Die Ergebnisse sind in der folgenden Tabelle wiedergegeben:

| Präparat | Tierart | Ø-Zahl lebender Flöhe auf dem Wirtstier vor Anlegen des Formkörpers | Ø-Zahl lebender Flöhe auf dem Wirtstier 1 Tage nach Anlegen des Formkörpers | Ø-Wirkung in % |
|---|---|---|---|---|
| Cyfluthrin | Hund<br>Katze | 11<br>8 | 10<br>7,5 | 9,1<br>6,3 |
| beta-Cyfluthrin | Hund<br>Katze | 11,3<br>12,5 | 0<br>0 | 100<br>100 |
| unbehandelte Kontrolle | Hund<br>Katze | 13<br>10 | 12,8<br>10 | 1,6<br>0 |

B) In vivo-Formkörper-Test

Zur Feststellung der akuten Wirkung bei Zecken (Rhipicephalus sanguineus) des Hundes und der Katze.

Hunde und Katzen werden mit je ca. 20 männlichen und weiblichen Zecken der Art R. sanguineus so infiziert, daß zum Zeitpunkt des Anlegens der Formkörper sich die weiblichen Zecken im halbvollgesogenem Zustand befinden.

Diesen Hunden/Katzen werden Formkörper ("Medaillons") aus PVC, die den zu testenden Wirkstoff in einer Konzentration von 10 Gew.-% enthalten, angelegt.

Die akute Wirkung des zu testenden Formkörpers wird ermittelt, indem 24 h nach Anlegen des Formkörpers die Zahl der lebenden Zecken auf den Hunden/Katzen festgestellt wird.

Die Wirkung wird in % ausgedrückt. Dabei bedeutet 100 % Wirkung, daß keine lebenden Zecken am Tier gefunden werden, 0 % Wirkung bedeutet, daß die Zahl der lebenden Zecken nach Anlegen des Formkörpers derjenigen Zahl vor Anlegen des Formkörpers entspricht. Die Ergebnisse sind in der folgenden Tabelle wiedergegeben:

| Präparat | Tierart | Ø-Zahl lebender Zecken auf dem Wirtstier vor Anlegen des Formkörpers | Ø-Zahl lebender Zecken auf dem Wirtstier 1 Tage nach Anlegen des Formkörpers | Ø-Wirkung in % |
|---|---|---|---|---|
| Cyfluthrin | Hund<br>Katze | 6,3<br>6,5 | 5,3<br>4,7 | 15,9<br>27,7 |
| beta-Cyfluthrin | Hund<br>Katze | 15,5<br>8,4 | 0<br>0 | 100<br>100 |
| unbehandelte Kontrolle | Hund<br>Katze | 7,2<br>19 | 7,2<br>18,4 | 0<br>3,2 |

Aus den angeführten Untersuchungsergebnissen geht deutlich hervor, daß Cyfluthrin-haltige Formkörper auf Flohbefall bei Hund und Katze zu (10 % und auf Zeckenbefall bei Hund und Katze zu <30 % wirken, d.h. praktisch völlig unwirksam sind, da für eine erfolgversprechende Bekämpfung dieser Parasiten Wirkungsprozentsätze von >95 % erreicht werden müssen.

Hingegen zeigen die erfindungsgemäßen beta-Cyfluthrinhaltigen Formkörper sowohl bei Flohbefall als auch bei Zeckenbefall bei Hund und Katze 100 % Wirkung.

**Patentansprüche**

1. Formkörper zur Bekämpfung von Schädlingen, die als Wirkstoff beta-Cyfluthrin enthalten

2. Verwendung von beta-Cyfluthrin als Wirkstoff in Formkörpern zur Bekämpfung von Schädlingen

3. Verwendung von beta-Cyfluthrin als Wirkstoff zur Herstellung von Formkörpern zur Bekämpfung von Schädlingen.

Europäisches Patentamt

# EUROPÄISCHER RECHERCHENBERICHT

Nummer der Anmeldung

EP 92 11 3531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 050 782 (BAYER)<br>* Seite 1, Zeile 1 - Zeile 3 *<br>* Seite 6, Zeile 1 - Zeile 6 *<br>* Seite 25, Zeile 3 - Zeile 5 *<br>* Beispiele 3,4,7,8 *<br>* Seite 32, Vergleichsversuch 2 * | 1-3 | A01N53/00<br>A01N25/34 |
| X | EP-A-0 050 784 (BAYER)<br>* Seite 1, Zeile 1 - Zeile 7 *<br>* Seite 6, Zeile 1 - Zeile 6 *<br>* Beispiele 3,4,15,16 * | 1-3 | |
| Y | EP-A-0 135 853 (BAYER)<br>* Seite 1, Zeile 1 - Zeile 6 *<br>* Seite 2, Zeile 12 - Zeile 19 *<br>* Anspruch 1 * | 1-3 | |
| Y<br><br><br>D | EP-A-0 206 149 (BAYER)<br>* Seite 1, Zeile 16 - Zeile 19 *<br>* Seite 6, Zeile 5 - Zeile 6 *<br>& DE-A-3 522 629 | 1-3 | **RECHERCHIERTE SACHGEBIETE (Int. Cl.5 )** |
| P,X | EP-A-0 470 467 (BAYER)<br>* Seite 23, Zeile 24 - Zeile 26 *<br>* Beispiele 3,6 * | 1-3 | A01N |

Der vorliegende Recherchenbericht wurde für alle Patentansprüche erstellt

| Recherchenort | Abschlußdatum der Recherche | Prüfer |
|---|---|---|
| DEN HAAG | 04 NOVEMBER 1992 | W. Lamers |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)